# EUROPÄISCHE PATENTSCHRIFT

(11) **EP 1 108 204 B1**
(45) Veröffentlichungstag und Bekanntmachung des Hinweises auf die Patenterteilung: **13.03.2002**
(21) Anmeldenummer: 99946065.2
(22) Anmeldetag: 30.08.1999
(51) Int. Cl.: G01M 1/04

(54) **UNWUCHTMESSVORRICHTUNGEN MIT MINDESTENS EINER VIRTUELLEN LAGERSTELLE**
ROTOR IMBALANCE MEASURING DEVICES WITH AT LEAST ONE VIRTUAL BEARING POINT
DISPOSITIFS DE MESURE D'UN DEFAUT D'EQUILIBRAGE D'UN ROTOR COMPORTANT AU MOINS UNE ZONE D'APPUI VIRTUELLE

(30) Priorität: 02.09.1998 DE 19839976; 30.09.1998 DE 19844975
(43) Veröffentlichungstag der Anmeldung: 20.06.2001
(73) Patentinhaber: Snap-On Technologies, Inc., Lincolnshire, IL 60069 (US)
(72) Erfinder: GOEBEL, Eickhart, D-64319 Pfungstadt (DE)
(74) Vertreter: Nöth, Heinz, Dipl.-Phys.
(86) Internationale Anmeldenummer: EP9906372
(87) Internationale Veröffentlichungsnummer: WO0014503

(56) Entgegenhaltungen:
- EP-A- 0 133 229
- EP-A- 0 343 265
- WO-A-97/16882
- WO-A-98/10261
- DE-A- 2 920 030
- DE-A- 3 330 880
- DE-A- 4 329 831
- US-A- 5 189 912

## Beschreibung

### [Stand der Technik]

Die Erfindung betrifft Vorrichtungen nach dem Oberbegriff des Patentanspruches 1, wie aus DE 33 32 978 A1 bekannt.

Bei einer derartigen Vorrichtung zur Messung von Kräften,welche durch eine Unwucht eines Rotors erzeugt werden, ist es bekannt, die Meßwelle in zwei im axialen Abstand voneinander angeordneten Lagereinheiten, welche über Kraftmeßgeber gegenüber einem hohlen Lagergehäuse abgestütz sind, drehbar zu lagern. Diese Meßwellenlagerung wird von einem ortsfesten Rahmen getragen.

Aus der EP 0 343 265 A1 ist es bei einer Auswuchtmaschine bekannt, einen sich axial zur Meßwelle erstreckenden Stützträger schwingungsfähig gegenüber einem orstfesten Rahmen zu lagern und im axialen Abstand voneinander angeordnete Meßgeber zwischen dem Stützträger und dem ortsfesten Rahmen anzuordnen. Aus der DE 33 30 880 A1 ist es bekannt, eine die Meßwellendrehlagerung aufnehmende Abstützung über im axialen Abstand voneinander angeordnete Kraftmeßwandler an einem ortsfesten Rahmen abzustützen.

Bei einer aus der EP 0 133 229 A1 bekannten Vorrichtung, die zum Auswuchten von Kraftfahrzeugrädern dient, wird die Meßwelle in einer Kraftmeßgeber aufweisenden Lagerung an einem ortsfesten Rahmen abgestützt. Zur Erzielung eines dynamischen Unwuchtausgleichs sind zwei Lagerebenen, in denen auch die Kraftmeßgeber angeordnet sind, für die Lagerung der Meßwelle vorgesehen.

Aus der EP 0 058 860 Bl ist eine Auswuchtmaschine für Rotationskörper bekannt, bei welcher die Meßwelle auf einem senkrecht am Maschinenbett angeordneten elastisch nachgiebigem Flachteil drehbar gelagert ist. Hierzu ist das Drehlager der Meßwelle an der oberen Kante des Flachteils vorgesehen.
Positionsauslenkungen des Flachteils werden über einen im rechten Winkel zum Flachteil verlaufenden Arm von Meßgebern erfaßt, deren Krafteinleitungsrichtungen senkrecht zueinander verlaufen. Der eine Meßgeber nimmt dabei den statischen Anteil auf, während der andere Meßgeber die aus der dynamischen Unwucht resultierenden Kräfte, welche eine Verdrehung des senkrechten elastisch nachgiebigen Flachteils um etwa eine Mittellinie bewirken, erfaßt.

Ferner ist aus der DE-AS 16 98 164 ein schwingungsmessendes (überkritisches) Meßsystem bekannt mit einer Lagerung für den Rotor auf schräg zueinander gestellten Blattfedern, deren Verlängerungen einen virtuellen Schnittpunkt in einer der Ausgleichsebenen des auszuwuchtenden Rotors bilden. Die beiden schräg zueinander gestellten Blattfedern sind über eine Zwischenplatte auf parallel zueinander angeordneten senkrecht stehenden Blattfedern gegen eine Grundplatte abgestützt. Mittels Schwingungsumformern werden die aus einer Rotorunwucht resultierenden Schwingungen der Blattfedern erfaßt und in entsprechende Meßsignale umgesetzt.

Aus der DE-AS 10 27 427 und der DE-AS 10 44 531 ist es bekannt, bei Federstäben oder Plattfedern, welche schwingungsfähige Lagerungen in Auswuchtmaschinen bilden, durch Verdünnungsstellen Gelenke zu bilden.

Die bei den bekannten Vorrichtungen in den Lagerebenen an den Meßorten vorgesehenen Kraftmeßgeber liefern Meßgebersignale, die proportional den Fliehkräften sind, die aus der Rotorunwucht resultieren und in den Lagerebenen bzw. an den Meßorten die von den Meßgebern gemessenen Reaktionskräfte hervorrufen. Bei den herkömmlichen Standardmeßsystemen für Radauswuchtmaschinen ist für die Meßwelle und den darauf aufgespannten Rotor eine fliegende Lagerung üblich. Die Umrechnung auf die beiden Ausgleichsebenen am Rotor für den dynamischen Unwuchtausgleich erfolgt aufgrund der Kraft-Hebel-Gesetze der Statik. Die von den Kraftmeßgebern in den beiden Lagerebenen gemessenen Kräfte sind daher abhängig vom jeweiligen Abstand, den der Rotor zu den beiden Kraftmeßgebern hat. Da diese Abstände unterschiedlich groß sind, ergibt sich bei der Änderung der Empfindlichkeit eines der beiden Meßwandler aufgrund unterschiedlicher Einwirkungen, z.B. durch Temperatur, Alterung, Schlag, Überlastung, Transporterschütterung, Feuchtigkeitseinfluß und dergl., ein überproportionaler Fehler bei den für die jeweiligen Ausgleichsebenen errechneten Ausgleichsmassen.

### [Aufgabe der Erfindung]

Aufgabe der Erfindung ist es, Vorrichtungen der eingangs genannten Art zu schaffen, bei welchen eine Empfindlichkeitsänderung eines Meßwandlers sich aufgrund der oben erläuterten Kräftedynamik nur geringfügig auf den in den Ausgleichsebenen vorzunehmenden Massenausgleich, beispielsweise durch anzubringende Ausgleichsgewichte, auswirkt.

Diese Aufgabe wird erfindungsgemäß durch Merkmale des Patentanspruchs 9 oder durch die kennzeichnenden Merkmale des Patentanspruches 1 gelöst.

Hierzu ist der starr ausgebildete Zwischenrahmen, an welchem die Meßwelle in einer einen Kraftmeßgeber aufweisenden Lagerebene abgestützt ist, am ortsfesten Rahmen über einen weiteren Kraftmeßgeber abgestützt. Die beiden Kraftmeßgeber befinden sich somit in zwei Lagersystemen für eine kraftmessende Unwuchterfassung, wobei jeder Kraftmeßgeber einem der beiden Lagersysteme zugeordnet ist. Die beiden Lagersysteme befinden sich zwischen der Meßwelle und dem starren Rahmen, beispielsweise der Auswuchtmaschine, an welcher die Unwuchtmessung und der Unwuchtausgleich an einem Kraftfahrzeugrad vorgenommen wird. Die Kraftmeßgeber können dabei in verschiedenen, jedoch im Bereich des starren Zwischenrahmens liegenden Lagerebenen oder in einer gemeinsamen Lagerebene liegen.

Durch die Ausbildung der beiden oben erwähnten Lagersysteme ist wenigstens eine weitere Abstützung der Meßwelle vorgesehen, welche die Eigenschaft einer virtuellen Lagerstelle in einer weiteren Lagerebene hat. Es können auch zwei derartige Lagerebenen mit derartigen virtuellen Lagerstellen vorgesehen sein. Die virtuellen Lagerstellen können sich zu beiden Seiten des zu messenden Rotors befinden. Es ist jedoch auch möglich, nur eine eine virtuelle Lagerstelle aufweisende zusätzliche Lagerebene vorzusehen, welche sich bevorzugt zwischen den beiden Ausgleichsebenen des Rotors oder auch zwischen der Ebene, in der die Kraftmeßgeber liegen, und dem Rotor befindet.

In bevorzugter Weise sind die beiden Kraftmeßgeber in einer gemeinsamen Lagerebene, welche senkrecht zur Achse der Meßwelle verläuft, angeordnet. Die in den Kraftmeßgebern als Reaktionskräfte eingeleiteten Kräfte sind parallel, insbesondere koaxial, zueinander ausgerichtet und befinden sich in der gemeinsamen Lagerebene. Die Kraftmeßgeber können jedoch im Bereich der axialen Ausdehnung des Zwischenrahmens in unterschiedlichen Lagerebenen liegen.

Eine bevorzugte Ausführungsform besteht darin, daß die Meßwelle in einer ersten den Kraftmeßgeber aufweisenden Lagerebene und in einer zweiten die virtuelle Stützstelle aufweisenden Lagerebene am Zwischenrahmen abgestützt ist und daß der Zwischenrahmen in der einen Lagerebene über den zweiten Kraftmeßgeber am ortsfesten Rahmen angestützt ist und ferner mittels einer Parallelführung am ortsfesten Rahmen angelenkt ist. Die die virtuelle Stützstelle aufweisende Lagerebene kann sich zwischen dem Rotor, insbesondere Kraftfahrzeugrad, und der Lagerebene, welche die beiden Kraftmeßgeber aufweist, oder bevorzugt zwischen den beiden Ausgleichsebenen des Rotors, insbesondere Kraftfahrzeugrades befinden.

Der Zwischenrahmen kann über ein Stützhebelpaar und Gelenken an den jeweiligen Enden der Stützhebel am ortsfesten Rahmen abgestützt sein. Auch die Meßwelle kann über ein Stützhebelpaar und Gelenken an den Hebelenden am Zwischenrahmen abgestützt sein. Die Achsen der jeweiligen Gelenke verlaufen senkrecht zu der Ebene, in welcher die in die Kraftmeßgeber eingeleiteten Kräfte und die Achse der Meßwelle liegen. Das Stützhebelpaar, welches den Zwischenrahmen am ortsfesten Rahmen abstützt, kann gleichzeitig die Parallelführung des Zwischenrahmens am ortsfesten Rahmen bewirken. Hierzu verlaufen die Stützhebel parallel zueinandern. Es ist jedoch auch möglich, die Stützhebel im Winkel zueinander anzuordnen, wobei der Scheitel des Winkels bevorzugt in der Achse der Meßwelle oder in der Nähe dieser Meßwellenachse liegt. Die Gelenke der Stützhebel liegen dann in den Ecken eines Trapezes der Grundrißanordnung der Stützhebel. Durch diese Anordnung wird die an der äußeren Seite des Rotors liegende virtuelle Lagerstelle geschaffen. Die innerhalb des Rotors, insbesondere zwischen den Ausgleichsebenen, liegende virtuelle Lagerstelle der Meßwelle am Zwischenrahmen kann ebenfalls durch im Winkel zueinander angeordnete Stützhebel, deren Gelenke in den Ecken eines Grundrißtrapezes der Stützhebelanordnung liegen, gebildet werden. In bevorzugter Weise sind die Stützhebel als biegesteife Flachteile, z.B. Blechteile, Gußteile, gewalzte Flachteile und dergleichen ausgebildet, welche zusammen mit den Gelenken gewährleisten, daß in die Meßgeber die gewünschte, beispielsweise im wesentlichen lineare und koaxial verlaufende Krafteinleitung erfolgt. Die Stützhebelanordnung, welche aus den Flachteilen gebildet ist, kann aus einem Stück hergestellt sein, wobei die Flachteile biegesteif ausgebildet sind und nur die dazwischenliegenden, im wesentlichen linienförmig verlaufenden Gelenke biegeelastisch sind. Die Gelenke können durch Schwachstellen, beispielsweise Einschnürungen zwischen den einzelnen biegesteifen Flachteilen gebildet sein. Hierdurch werden biegeelastische Gelenkachsen zwischen den biegesteifen Flachteilen gebildet. Durch die entsprechende Anordnung, parallel oder im Winkel, werden dann, wie oben erläutert, die gewünschten virtuellen Lagerstellen, welche in den jeweiligen Lagerebenen linienförmig sich erstreckende Lagerachsen bilden, geschaffen.

Die virtuellen Lagerstellen sind auch die im Rahmenrechner der Auswuchtmaschine berücksichtigten Meßorte, welche virtuelle Meßorte darstellen.

### [Beispiele]

Anhand der Figuren wird an Ausführungsbeispielen die Erfindung noch näher erläutert. Es zeigt:
- Fig. 1:: ein erstes Ausführungsbeispiel;
- Fig. 2:: ein zweites Ausführungsbeispiel;
- Fig. 3:: ein drittes Ausführungsbeispiel;
- Fig. 4: ein viertes Ausführungsbeispiel;
- Fig. 5:: ein fünftes Ausführungsbeispiel;
- Fig. 6:: ein sechstes Ausführungsbeispiel;
- Fig. 7:: eine Draufsicht auf eine Meßanordnung und Lagerung für die Meßwelle, wie sie bei den Ausführungsformen der Fig. 1, 3 und 5 zum Einsatz kommen kann;
- Fig. 8:: eine perspektivische Darstellung der Meßanordnung der Fig. 7 von vorne oben gesehen;
- Fig. 9:: eine perspektivische Darstellung der Meßanordnung der Fig. 7 und 8 seitlich von oben gesehen; und
- Fig. 10:: ein siebtes Ausführungsbeispiel.

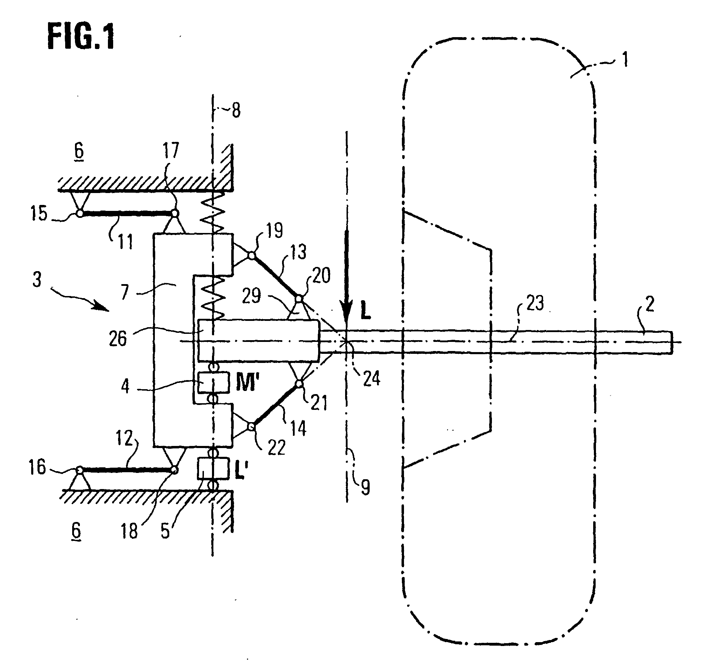

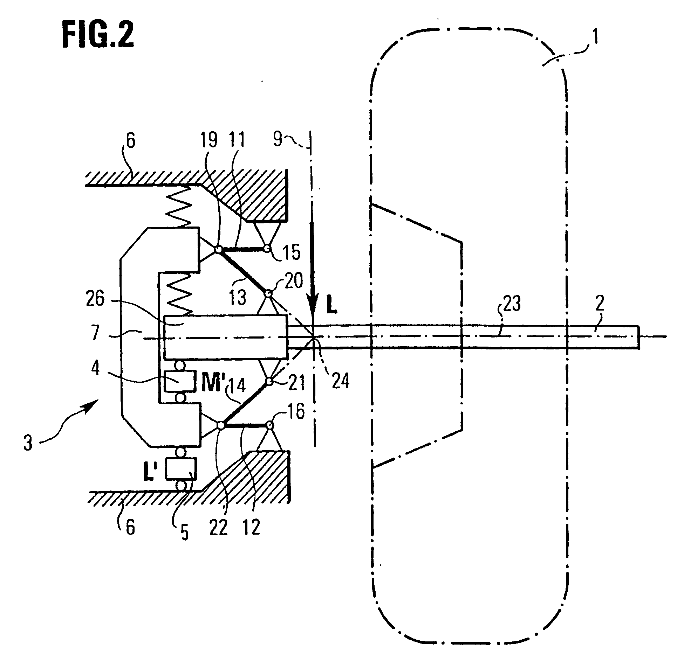

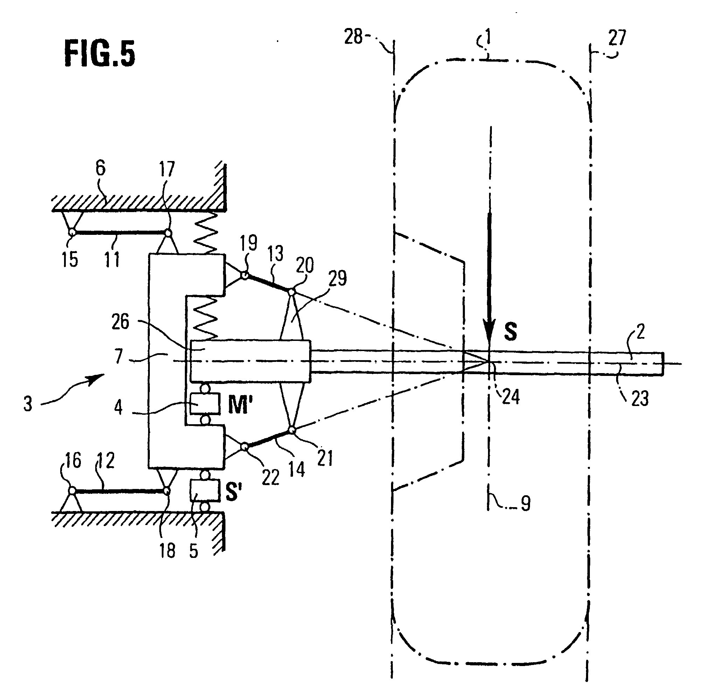

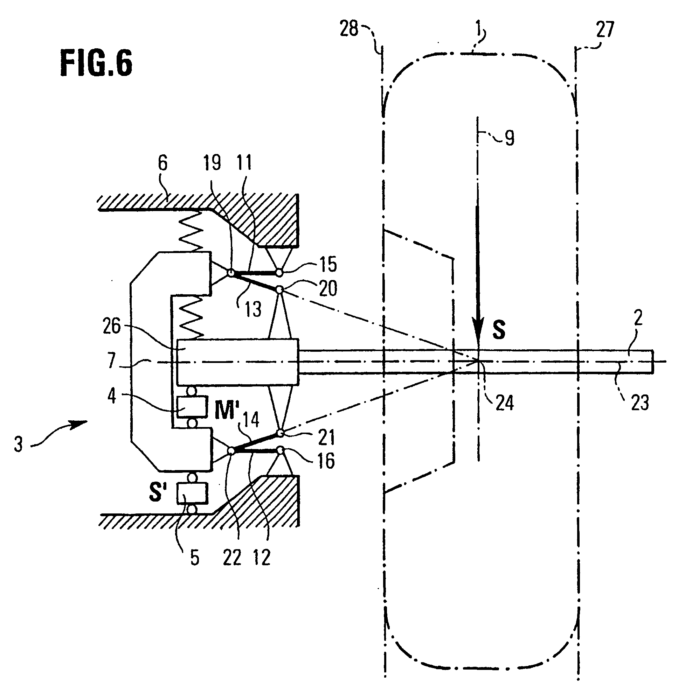

In den Figuren ist in schematischer Darstellung ein Rotor 1 dargestellt, welcher zur Unwuchtmessung an einer Meßwelle 2 in bekannter Weise durch nicht näher dargestellte Spannmittel befestigt ist. Die Meßwelle 2 ist drehbar an einem ortsfesten Rahmen 6 gelagert. Es kann sich hier um den Maschinenrahmen einer Radauswuchtmaschine handeln. Die Lagerung erfolgt mit Hilfe einer im einzelnen noch zu beschreibenden Lagerung 3, welche auch Kraftmeßgeber 4, 5 aufweist. Die Lagerung 3 kann ein rohrförmiges Drehlager 26 aufweisen, in welchem die Meßwelle 2 drehbar gelagert ist. Das Drehlager 26, welches die Meßwelle 2 aufnimmt, ist in einer ersten Lagerebene 8 an einem Zwischenrahmen 7 über den Kraftmeßgeber 4 starr gelagert. Ferner wird durch Stützhebel 13, 14, die ein Stützhebelpaar bilden und im Winkel zueinander verlaufen, eine virtuelle Stützstelle 24 in einer weiteren Lagerebene 9 geschaffen. Die Stützstelle 24 wirkt wie eine Schwenkachse, welche senkrecht zur Achse 23 der Meßwelle 2 und senkrecht zur Krafteinleitungsrichtung der aus der Unwuchtmessung resultierenden Reaktionskräfte in den Kraftmeßgeber 4 verläuft. An ihren Enden sind die Stützhebel 13 und 14 gelenkig (Gelenke 19 und 22) mit dem Zwischenrahmen 7 und gelenkig (Gelenke 20, 21) mit dem Drehlager 26 für die Meßwelle 2 verbunden. Die Gelenkachsen der Gelenke 19 bis 22 verlaufen parallel zur Schwenkachse, welche in der virtuellen Lagerstelle 24 gebildet ist. Die virtuelle Lagerstelle 24 kann sich zwischen dem Rotor 1 und der Lagerebene 8, in welcher die Kraftmeßgeber 4 und 5 liegen, befinden (Fig. 1 und 2).
Die virtuelle Lagerstelle 24 kann sich jedoch auch im Bereich des Rotors, insbesondere zwischen Ausgleichsebenen 27 und 28 befinden, in welchen der Unwuchtausgleich, beispielsweise durch Anbringen von Ausgleichsgewichten durchgeführt wird (Fig. 5 und 6).

Der Zwischenrahmen 7 ist über den Kraftmeßgeber 5 am ortsfesten Rahmen 6 abgestützt. Der Kraftmeßgeber 5 kann in der senkrecht zur Meßwelle 2 liegenden Lagerebene 8 angeordnet sein. Es ist jedoch auch möglich, den Kraftmeßgeber 5 in axialer Richtung der Meßwelle 2 versetzt in einer anderen Lagerebene anzuordnen. Ferner ist der Zwischenrahmen 7 über ein Stützhebelpaar (Stützhebel 11 und 12) am ortsfesten Rahmen 6 abgestützt. An den Enden sind die Stützhebel 11, 12 mit dem ortsfesten Rahmen 6 gelenkig (Gelenke 15, 16) verbunden und gelenkig (Gelenke 17, 18 bei den Figuren 1, 3, 5, 10 und 7 bis 9 sowie Gelenke 19, 22 bei den Figuren 2, 4 und 6) mit dem Zwischenrahmen 7 verbunden. Der Zwischenrahmen 7 ist als starrer Lagerblock oder starrer und biegesteifer Lagerrahmen ausgebildet.

Bei den Ausführungsformen der Figuren 1 und 2 sowie 5 bis 9 verlaufen die Stützhebel 11 und 12 im wesentlichen parallel zueinander und parallel zur Achse 23 der Meßwelle 2. Die Stützhebel 11 und 12 bilden somit eine Parallellenkerführung zur im wesentlichen senkrecht zur Achse 23 der Meßwelle 2 gerichteten Krafteinleitung der beim Unwuchtmeßlauf sich ergebenden Reaktionskräfte in den Kraftmeßgeber 5.

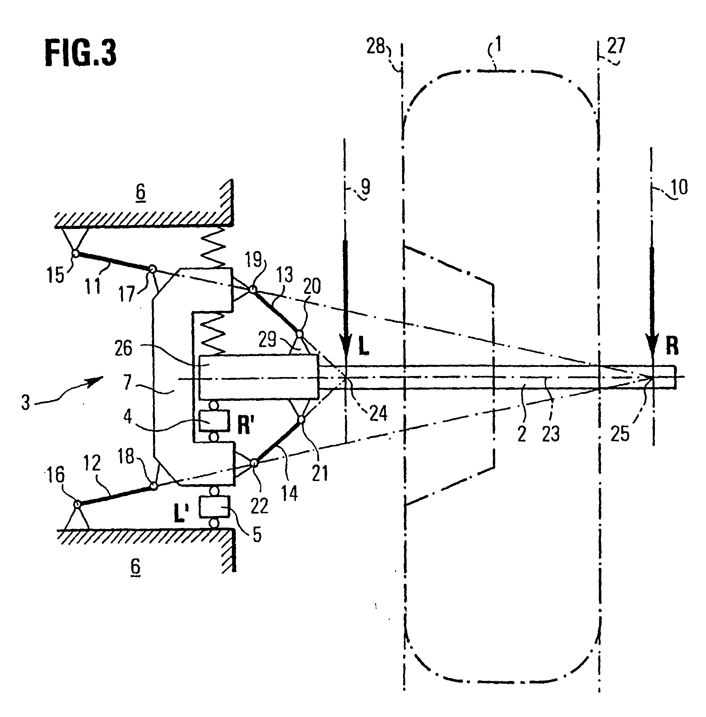

Bei den Ausführungsformen der Figuren 3, 4 und 10 sind die beiden Stützhebel 11 und 12 in einem spitzen Winkel zueinander angeordnet, dessen Scheitel in der Achse 23 der Meßwelle 2 oder in der Nähe der Achse 23 liegt. Dieser Scheitel bildet eine weitere virtuelle Lagerstelle 25 in einer senkrecht zur Meßwelle 2 sich erstreckenden Lagerebene 10, welche an der Außenseite des Rotors 1 liegt.

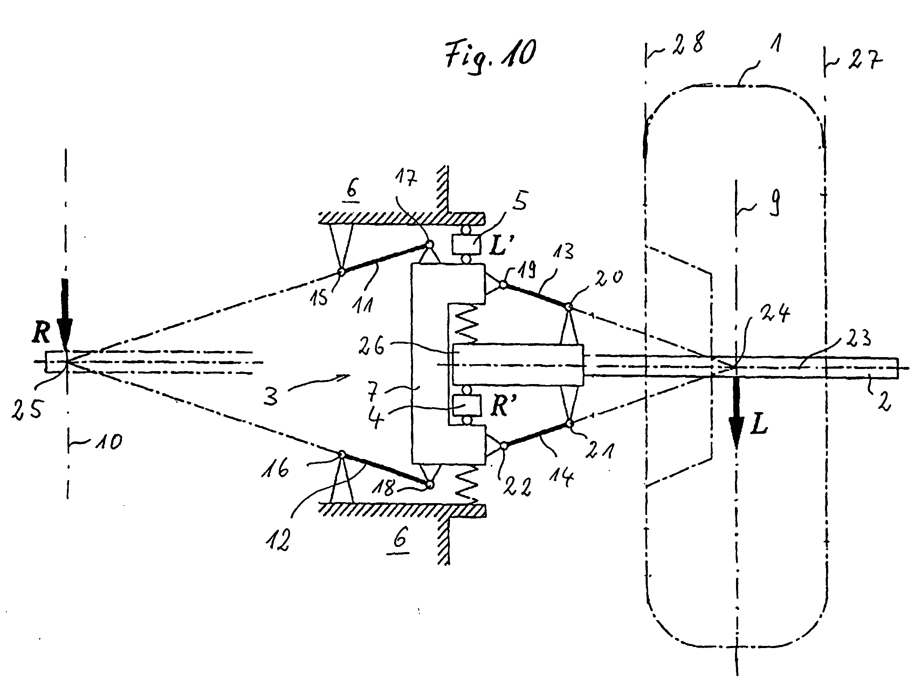

In der Ausführungsform der Figur 10 liegt die virtuelle Lagerstelle 25 und die Lagerebene 10 in einer strichpunktiert gezeichneten Verlängerung der Meßwelle 2, welche bezüglich der Lagerung 3 der Meßwelle 2 entgegensetzt zur Längsausdehnung der Meßwelle 2 verläuft. Die Lagerstelle 25 und die dazugehörige Lagerebene 10 liegen bezüglich der Lagerung 3 auf der zum Rotor entgegengesetzt liegenden Seite.

Auch die virtuelle Lagerstelle 25 hat die Eigenschaft einer Schwenkachse, die senkrecht auf der Achse 23 der Meßwelle 2 und senkrecht auf die Einleitungsrichtung der Krafteinleitung in die Kraftmeßgeber 4 und 5 liegt. Bei den dargestellten Ausführungsbeispielen erfolgt diese Krafteinleitung in der Lagerebene 8. Zur Bildung der Schwenkachseneigenschaft in der jeweiligen virtuellen Lagerstelle 24, 25 verlaufen die Gelenkachsen der Gelenke 15 bis 22 parallel zueinander und senkrecht zur Achse 23 der Meßwelle 2 sowie zur Krafteinleitungsrichtung der Reaktionskräfte in die Kraftmeßgeber 4 und 5 in der Lagerebene 8.

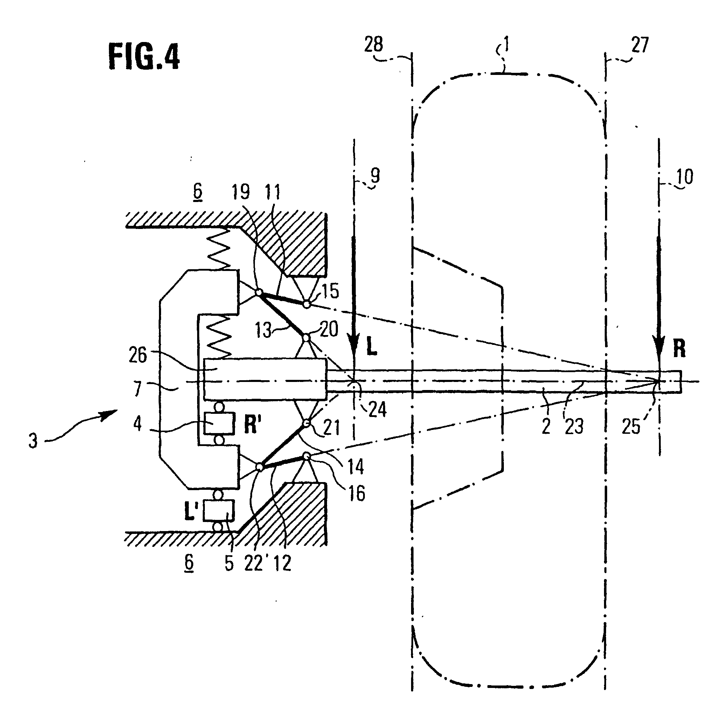

Bei den Ausführungsformen der Figuren 3 und 4 werden zu beiden Seiten des Rotors 2, nämlich an der Innenseite und der Außenseite des Rotors Lagerebenen 9 und 10 mit den virtuellen Lagerstellen 24 und 25 geschaffen. Die virtuellen Lagerstellen 24 und 25 haben die Eigenschaften virtueller Meßorte. Der inneren Lagerstelle 24 zugeordnete Kräfte L werden vom Kraftmeßgeber 5 und der Lagerstelle 25 zugeordnete Kräfte R werden in den Kraftmeßgeber 4 eingeleitet. Die Kraftmeßgeber erzeugen entsprechende Meßgebersignale L' und R'. Daß in den virtuellen Lagerstellen 24 und 25 auch virtuelle Meßorte geschaffen sind, ergibt sich daraus, daß dann, wenn eine aus der Rotorunwucht resultierende Fliehkraft in der linken Lagerebene 9 angreift, ein der Größe dieser Fliehkraft proportionales Meßsignal L' vom Kraftmeßgeber 5 abgegeben wird, während der Kraftmeßgeber 4 kein Signal abgibt. Wenn in der rechten äußeren Lagerebene 10 eine aus der Rotorunwucht resultierende Fliehkraft R angreift, gibt nur der Kraftmeßgeber 4 ein proportionales Meßsignal R' ab, während der Kraftmeßgeber 5 kein Signal erzeugt. Hieraus ergibt sich eine fliegende Lagerung, bei welcher die Ausgleichsebenen 27 und 28 am Rotor 1 zwischen den virtuellen Meßorten bzw. virtuellen Meßebenen, welche mit den Lagerebenen 9 und 10 übereinstimmen, sich befinden, wie es in den Fig. 3 und 4 dargestellt ist. Bei einem aus der Rotorunwucht resultierenden Krafteingriff zwischen den Lagerebenen 9 und 10 werden die in diesen Ebenen (virtuelle Meßebene) wirksamen Lagerkräfte entsprechend den Lagerabständen von der Eingriffsstelle aufgeteilt und entsprechende Meßgebersignale von den Kraftmeßgebern 4 und 5 abgegeben.

Bei der in der Figur 10 dargestellten Ausführungsform befindet sich die eine virtuelle Lagerstelle 24, an welcher eine aus der Rotorumwucht resultierende Fliehkraft L wirksam werden kann, in der Lagerebene 9 zwischen den beiden Ausgleichsebenen 27, 28, bevorzugt etwa in der Mitte zwischen den beiden Ausgleichseben 27, 28. Die andere virtuelle Lagerstelle 25 befindet sich bezüglich der Lagerung 3 der Meßwelle 2 auf der anderen Seite in der Verlängerung der Meßwelle.
Hier wirkt eine aus der Rotorunwucht resultierende Fliehkraft R. Wie oben schon erläutert, liefern die Meßgeber 4 und 5 den Fliehkräften R und L proportionale Meßsignale R' und L'.

Bei den Ausführungsformen der Figuren 1 und 2 sowie 5 bis 9 befindet sich die äußere virtuelle Lagerstelle im Unendlichen oder in einer relativ großen Entfernung von einigen Metern, z.B. zwischen etwa 3 bis 20 m und mehr, da durch die Stützhebel 11 und 12 im wesentlichen eine Parallelführung des Zwischenrahmens 7 bewirkt wird. Wird bei diesen Ausführungsformen in der Lagerebene 9 (virtuelle Meßebene) an der virtuellen Lagerstelle (virtueller Meßort) eine aus der Rotorunwucht resultierende Fliehkraft (L in den Fig. 1 und 2 und S in den Fig. 5 und 6) eingeleitet, wird diese Kraft nur vom Kraftmeßgeber 5 erfaßt und von diesem ein proportionales Signal L' bzw. S' abgegeben. Der Kraftmeßgeber 4 gibt kein Signal ab.
Unabhängig vom Abstand der eingeleiteten Fliehkraft wird der Kraftmeßgeber 5 aufgrund der Parallelführung des Zwischenrahmens 7 ein nur der Fliehkraftgröße proportionales Signal abgeben. Der Kraftmeßgeber 4 wird hingegen ein Meßsignal M' abgeben, welches nicht nur der Fliehkraftgröße und damit der Unwuchtgröße proportional ist, sondern auch dem Abstand der Krafteinleitungsstelle von der Lagerebene 9 bzw. der virtuellen Lagerstelle 24.

Bei den Ausführungsformen der Figuren 1, 3, 5 und 10 sowie der Fig. 7 bis 9 erfolgt die Abstützung des Zwischenrahmens 7 am ortsfesten Rahmen 6 mit Hilfe des aus den Stützhebeln 11 und 12 gebildeten Stützhebelpaares und die Abstützung des rohrförmigen Drehlagers 26 der Meßwelle 2 mit Hilfe des aus den Stützhebeln 13 und 14 gebildeten Stützhebelpaares in axialer Richtung der Meßwelle 2 gesehen hintereinander. Die Stützhebelpaare der Ausführungsformen der Figuren 3 und 4 haben die gleiche Neigungsrichtung. Bei dem Ausführungsbeispiel 11, 12 ist die Neigungsrichtung entgegengesetzt zu der Neigungsrichtung des Stützhebelpaares 13, 14. Bei den Ausführungsformen der Figuren 2, 4 und 6 erfolgt die Abstützung des Stützrahmens 7 am ortsfesten Rahmen 6 und des Drehlagers 26 der Meßwelle 2 am Zwischenrahmen 7 mit den jeweiligen Stützhebelpaaren 11, 12 und 13, 14 nebeneinander bzw. übereinander. Dabei können die Gelenke 17, 19 und 18, 22 in den gemeinsamen Gelenken 19 und 22 am Zwischenrahmen 7 zusammenfallen, wie es in den Fig. 2, 4 und 6 dargestellt ist.

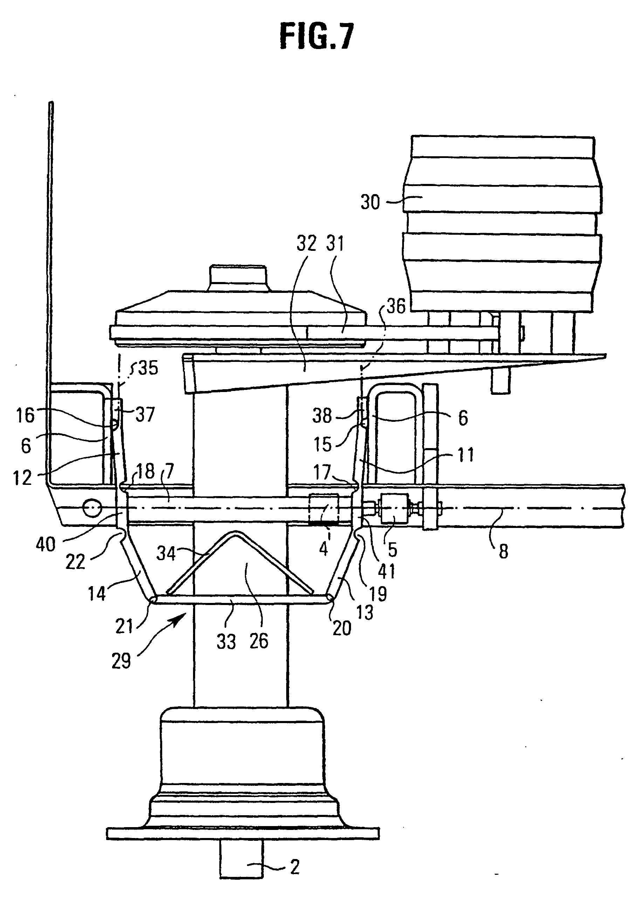

Die Stützhebel 11 bis 14 können von Flachteilen gebildet werden, die starr und biegesteif ausgebildet sind. Die Flachteile können aus einem Stück gebildet sein, wobei die Gelenke durch linienförmige Schwachstellen, z.B. in Form von Einschnürungen gebildet sind. Wie aus den Fig. 7 bis 9 zu ersehen ist, kann aus dem Stück, welches die Flachteile für die Stützhebel 11 bis 14 bildet, auch eine Halteplatte 33 gebildet sein, welche Bestandteil der Halteeinrichtung 29 ist. Die Halteplatte 33 ist fest mit dem rohrförmigen Drehlager 26, beispielsweise durch Schweißen verbunden. Zusätzlich kann als Bestandteil der Halteeinrichtung 29 noch ein Stützwinkel 34 vorgesehen sein, der ebenfalls durch beispielsweise Schweißen fest mit der Halteplatte 3 und dem Drehlager 26 verbunden ist. In den Figuren ist der obere Stützwinkel 34 dargestellt.
Es kann zusätzlich auch ein unterer Stützwinkel noch vorgesehen sein. Der obere und untere Stützwinkel können auch aus einem Winkelstück bestehen, bei dem das Drehlager 26 durch eine Öffnung in dem Winkelstück geführt und fest, z.B. durch Schweißen mit dem Winkelstück verbunden ist. Hierdurch wird eine starre und biegesteife Verbindung der Halteeinrichtung 29 mit dem Drehlager 26 zwischen den beiden Gelenken 20 und 21 geschaffen. Die Gelenke 20 und 21 befinden sich zwischen den beiden Stützhebeln 13 und 14 und der Halteplatte 33.

Aus dem einen Stück, aus dem die Flachteile für die Stützhebel 11 bis 14 gebildet sind, können ferner Befestigungsplatten 37, 38 und 40, 41 gebildet sein. Die Befestigungsplatten 37, 38 sind fest, beispielsweise durch Schraubverbindungen oder anderweitig mit dem ortsfesten Rahmen 6 verbunden. Die Befestigungsplatten 37 und 38 bilden die Befestigungsstellen für das aus den Stützhebeln 11 und 12 gebildeten Stützhebelarm, mit welchem der Zwischenrahmen 7 am ortsfesten Rahmen 6 abgestützt ist. Zwischen den Befestigungsplatten 37 und 38 und den Flachteilen, welche die Stützhebel 11 und 12 bilden, sind die durch die linienförmigen Schwachstellen bzw. Einschnürungen gebildeten Gelenke 15 und 16 vorgesehen. Die Schwachstellen haben einen konkaven, insbesondere halbkreisförmigen Querschnitt.

Ferner sind aus dem einen Stück die beiden Befestigungsplatten 40 und 41 gebildet, welche fest, beispielsweise durch Schraubverbindungen, Schweißen oder dergleichen, mit Seitenflächen des Zwischenrahmens 7 verbunden sind. Zwischen den beiden Befestigungsplatten 40 und 41 und den Stützhebeln 11 und 12 sind durch die Schwachstellen bzw. Einschnürungen die Gelenke 17 und 18 gebildet. Zwischen den Flachteilen, welche die Stützhebel 13 und 14 bilden, sind durch Schwachstellen bzw. Einschnürungen die Gelenke 19 und 22 gebildet.

Auf diese Weise läßt sich aus einem Stück praktisch die gesamte Lagerung 3, mit welcher die Meßwelle 2 am ortsfesten Rahmen 6 abgestützt ist und welche die virtuellen Lagerstellen und Meßorte vorgibt, bilden.

Die parallel Führung des Zwischenrahmens 7 am ortsfesten Rahmen ergibt sich im wesentlichen dadurch, daß die Grundlinien der konkaven Einschnürungen 15, 17 und 16, 18 zu beiden Seiten der Stützhebel 11 und 12 etwa in parallelen Ebenen 35 und 36 liegen, in denen die Führungsfunktion der beiden Stützhebel 11 und 12 erreicht wird. Die jeweiligen Einschnürungen 15, 17 und 16, 18 befinden sich an gegenüberliegenden Flächen der die Flachteile bildenden Stützhebel 11 und 12. Die Stützhebel 11 und 12 sind in einem äußerst spitzen Winkel zueinander geneigt, wobei jedoch, wie schon erläutert die Parallellenkerführung durch Führungsfunktion in den parallelen Ebenen 35 und 36 erzielt wird. Hierdurch können den Figuren 1 und 5 entsprechende Meßanordnungen erreicht werden. Um eine der Figur 3 entsprechende Meßanordung zu erreichen, können die Stützhebel 11 und 12 in einem entsprechend größeren Winkel zueinander geneigt werden.

Um das in der Figur 10 dargstellte Ausführungsbeispiel zu verwirklichen, sind die Stützhebel 11, 12 in den Figuren 7 bis 9 an ihren hinteren Enden aufeinander zu gerichtet. Die hinteren Einschnürungen bzw. Gelenke 15, 16 liegen näher zur Achse der Meßwelle 2 als die vorderen Einschnürungen bzw. Gelenke 17, 18.

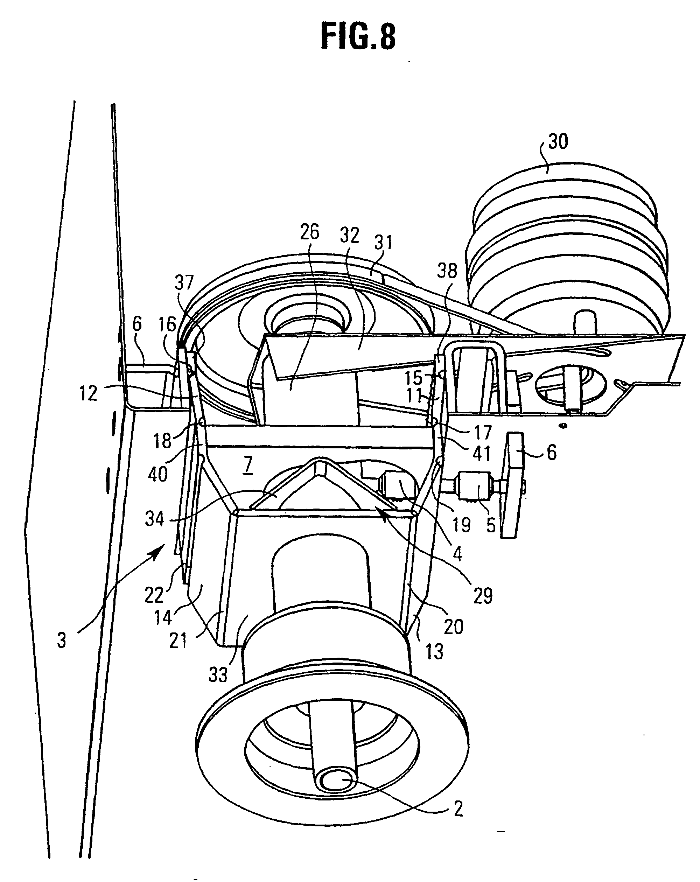

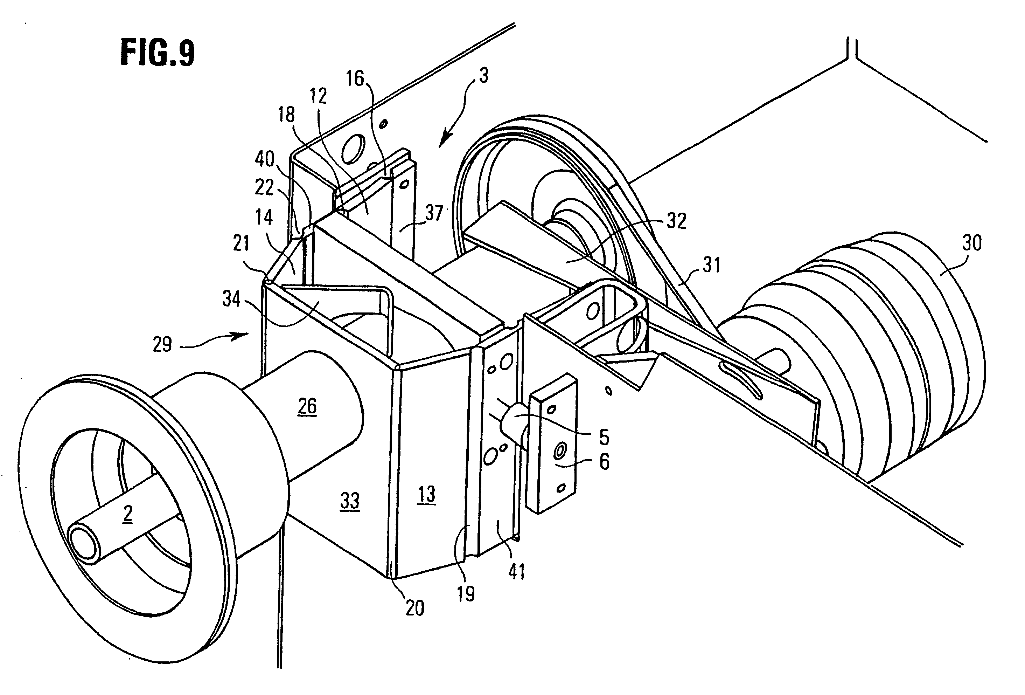

Wie ferner aus der Fig. 8 ersichtlich ist, sind die beiden Kraftgeber 4, 5 in einer Wirklinie angeordnet, wobei der Kraftmeßgeber 4 zwischen dem Drehlager 6 und der Innenseite des Zwischenrahmens 7 und der Kraftmeßgeber 5 zwischen der Außenseite des Zwischenrahmens 7 bzw. der Befestigungsplatte 41 (Fig. 9) und dem ortsfesten Rahmen 6 angeordnet sind.

Für den Antrieb der Meßwelle 2 ist ein Elektromotor 30 vorgesehen, welcher über einen Riementrieb 31 die Meßwelle antreibt. Der Motor 30 ist am Drehlager 26 über einen Auslegerarm 32 gelagert. Durch diese Lagerung wird das Meßergebnis aus vom Motorantrieb resultierenden Störungen nicht beeinflußt.

In axialer Richtung gesehen, wird eine kompakte Lagerung 3 für die Meßwelle 2 am ortsfesten Rahmen 6 geschaffen. Hieraus ergeben sich im Zusammenhang mit der reduzierten Kräftedynamik insbesondere bei fliegender Lagerung der Meßwelle 2 eine Verringerung des Einflusses von Empfindlichkeitsänderungen der Kraftaufnehmer, beispielsweise in Folge unterschiedlicher Einwirkungen von Temperatur, Alterung, Schlag, Überlastung, Transporterschütterungen und Feuchtigkeit, eine verringerte Notwendigkeit für den Austausch der Kraftmeßgeber, von Nachjustagen der Meßanordnung nach Transport und Aufstellung der Maschine, verringerte Servicekosten, verbesserte Meßgenauigkeit, verringerte Anforderungen an die Auflösung der AD-Wandler bei der Digitalisierung der analogen Meßsignale und ein großer virtueller Abstand der Meßebenen trotz der kompakten Bauweise. Trotz liegender Lagerung der Meßwelle erreicht man eine reduzierte Kräftedynamik ähnlich der einer Meßanordnung mit zwei Lagerstellen zu beiden Seiten des Rotors.

## Patentansprüche

1. Vorrichtung zur Messung von Kräften, welche durch eine Unwucht eines Rotors erzeugt werden, mit
- einer in einem Drehlager (26) drehbar um ihre Achse (23) gelagerten Meßwelle (2), an welcher der Rotor (1) für die Messung befestigt ist, und
- einer Kraftmeßgeber (4, 5) aufweisenden Lagerung (3) der Meßwelle (2) an einem ortsfesten Rahmen (6), wobei
- die Lagerung (3) einen Zwischenrahmen (7) aufweist, an welchem die Meßwelle (2) in einer einen Kraftmeßgeber (4) aufweisenden Lagerebene abgestützt ist,
**dadurch gekennzeichnet, daß**
- der Zwischenrahmen (7) am ortsfesten Rahmen (6) über einen weiteren Kraftmeßgeber (5) abgestützt ist und
- die Meßwelle (2) am Zwischenrahmen (7) und der Zwischenrahmen (7) am ortsfesten Rahmen (6) ferner in jeweils einer von Stützhebeln (11, 12, 13, 14) gebildeten virtuellen Lagerstelle (24, 25) abgestützt sind.

2. Vorrichtung nach Anspruch 1, **dadurch gekennzeichnet, daß** die Kraftmeßgeber (4,5) in Lagerebenen im Bereich des starren Zwischenrahmens (7) angeordnet sind.

3. Vorrichtung nach Anspruch 1 oder 2, **dadurch gekennzeichnet, daß** die Kraftmeßgeber (4, 5) in einer gemeinsamen Lagerebene (8) liegen.

4. Vorrichtung nach einem der Ansprüche 1 bis 3, **dadurch gekennzeichnet, daß** der Zwischenrahmen (7) am ortsfesten Rahmen (6) und die Meßwelle (2) am Zwischenrahmen (7) in der Weise gelagert sind, daß die in die Kraftmeßgeber (4, 5) eingeleiteten Kräfte in einer Ebene liegen und parallel, insbesondere koaxial, zueinander ausgerichtet sind.

5. Vorrichtung nach einem der Ansprüche 1 bis 4, **dadurch gekennzeichnet, daß** die virtuellen Lagerstellen (24, 25) außerhalb von Ausgleichsebenen (27, 28) liegen.

6. Vorrichtung nach einem der Ansprüche 1 bis 5, **dadurch gekennzeichnet, daß** die virtuellen Lagerstellen (24, 25) in ihren Schnittpunkten mit der Meßwelle (2) virtuelle Meßorte bilden.

7. Vorrichtung nach einem der Ansprüche 1 bis 6, **dadurch gekennzeichnet, daß** die virtuellen Lagerstellen (24, 25) linienförmig ausgebildet sind und senkrecht zur Meßwellenachse (23) verlaufen.

8. Vorrichtung nach einem der Ansprüche 1 bis 7, **dadurch gekennzeichnet, daß** die Meßwelle (2) am Zwischenrahmen (7) in einer zweiten Lagerebene (9), welche die von den Stützhebeln (13, 14) gebildete virtuelle Lagerstelle (24) aufweist, abgestützt ist und der Zwischenrahmen (7) in der den Kraftmeßgeber (5) aufweisenden Lagerebene (8) und mit Parallelführung am ortsfesten Rahmen (6) abgestützt ist.

9. Vorrichtung nach einem der Ansprüche 1 bis 8, **dadurch gekennzeichnet, daß** die Lagerung (3) nur eine virtuelle Lagerstelle (24) aufweist.

10. Vorrichtung nach einem der Ansprüche 1 bis 9, **dadurch gekennzeichnet, daß** die eine virtuelle Lagerstelle (24) zwischen den Ausgleichsebenen (27, 28) liegt.

11. Vorrichtung nach einem der Ansprüche 1 bis 9, **dadurch gekennzeichnet, daß** die eine virtuelle Lagerstelle (24) zwischen dem Rotor (1) und dem ortsfesten Rahmen (6) liegt.

12. Vorrichtung nach einem der Ansprüche 1 bis 7, **dadurch gekennzeichnet, daß** zwei virtuelle Lagerstellen (24, 25) beidseits des Rotors (1) vorgesehen sind.

13. Vorrichtung nach einem der Ansprüche 5 bis 12, **dadurch gekennzeichnet, daß** eine virtuelle Lagerstelle (24) etwa in der Mitte zwischen den beiden Ausgleichsebenen (27, 28) liegt.

14. Vorrichtung nach einem der Ansprüche 1 bis 13, **dadurch gekennzeichnet, daß** die von einem ersten Stützhebelpaar (11, 12) gebildete virtuelle Lagerstelle (25) in einer Verlängerung der Meßwelle (2) liegt, welche bezüglich der Lagerung (3) der Meßwelle (2) entgegengesetzt zur Längsrichtung der Meßwelle (2) verläuft.

15. Vorrichtung nach einem der Ansprüche 1 bis 14, **dadurch gekennzeichnet, daß** die Lagerstellen (24, 25) in Schnittpunkten der Verlängerungen der Stützhebel (11, 12 bzw. 13, 14) des jeweiligen Stützhebelpaares liegen.

16. Vorrichtung nach einem der Ansprüche 1 bis 15, **dadurch gekennzeichnet, daß** der Zwischenrahmen (7) über ein erstes Stützhebelpaar (11, 12) und Gelenke (15-18) am ortsfesten Rahmen (6) und die Meßwelle (2) über ein zweites Stützhebelpaar (13, 14) und Gelenke (19-22) am Zwischenrahmen (7) abgestützt sind und daß die Achsen der jeweiligen Gelenke (15-22) im wesentlichen senkrecht zu der Richtung verlaufen, in welcher die in die Kraftmeßgeber (4, 5) eingeleiteten Kräfte wirksam sind und senkrecht zur Achse (23) der Meßwelle (2) liegen.

17. Vorrichtung nach Anspruch 16, **dadurch gekennzeichnet, daß** die Stützhebel (11, 12) des ersten Stützhebelpaares parallel oder in einem Winkel, dessen Scheitel im wesentlichen in der Achse (23) der Meßwelle (2) liegt, angeordnet sind.

18. Vorrichtung nach Anspruch 16 oder 17, **dadurch gekennzeichnet, daß** die Stützhebel (11-14) durch biegesteife Flachteile gebildet sind, die zwischen den zugeordneten Gelenken (15-22) angeordnet sind.

19. Vorrichtung nach einem der Ansprüche 16 bis 18, **dadurch gekennzeichnet, daß** die die Stützhebel (11-14) bildenden Flachteile mit ihren Flächen in der gleichen Ebene liegen wie die Achsen der zugeordneten Gelenke (15-22).

20. Vorrichtung nach einem der Ansprüche 16 bis 19, **dadurch gekennzeichnet, daß** die Stützhebel (11 bis 14) und die Gelenke (15 bis 22) aus einem Stück gebildet sind, wobei die Gelenke (15 bis 22) als linear verlaufende Schwachstellen ausgebildet sind.

21. Vorrichtung nach einem der Ansprüche 1 bis 20, **dadurch gekennzeichnet, daß** wenigstens eine der beiden virtuellen Lagerstellen (24, 25) gegenüber der Achse (23) der Meßwelle (2) auf die Seite zu versetzt ist, auf welcher der jeweils zugeordnete Kraftmeßgeber (4, 5) liegt.

22. Vorrichtung nach einem der Ansprüche 1 bis 21, **dadurch gekennzeichnet, daß** die Abstützung der Meßwelle (2) im Zwischenrahmen (7) und die Abstützung des Zwischenrahmens (7) am ortsfesten Rahmen (6) in axialer Richtung der Meßwelle (2) gesehen hintereinander oder nebeneinander liegen.

23. Vorrichtung nach einem der Ansprüche 1 bis 22, **dadurch gekennzeichnet, daß** das Drehlager (26) mit einer biegesteifen Halteeinrichtung (29) im axialen Abstand zur Lagerebene (8), in welcher die Kraftmeßgeber (5, 6) liegen, fest verbunden ist und daß die Halteeinrichtung (29) über zwei im Winkel zueinander angeordnete Stützhebel (13, 14) und die Gelenke (19 bis 22) am Zwischenrahmen (8) abgestützt ist.

24. Vorrichtung nach einem der Ansprüche 1 bis 23, **dadurch gekennzeichnet, daß** die Gelenke (15-22) bildenden Schwachstellen einen konkaven Querschnitt aufweisen.

25. Vorrichtung nach einem der Ansprüche 1 bis 23, **dadurch gekennzeichnet, daß** die Gelenke (15-22) bildenden Schwachstellen als Linearperforationen ausgebildet sind.

## Claims

1. Apparatus for measuring forces which are produced by an unbalance of a rotary member, comprising
- a measuring shaft (2) which is supported in a rotary mounting (26) rotatably about its axis (23) and to which the rotary member (1) is fixed for the measurement operation, and
- a support means (3) having force measurement sensors (4, 5) for supporting the measuring shaft (2) on a stationary frame (6), wherein
- the support means (3) has an intermediate frame (7) on which the measuring shaft (2) is supported in a mounting plane having a force measurement sensor (4),
**characterised in that**
- the intermediate frame (7) is supported on the stationary frame (6) by way of a further force measuring sensor (5), and
- in addition the measuring shaft (2) is supported on the intermediate frame (7) and the intermediate frame (7) on the stationary frame (6) in a respective virtual mounting location (24, 25) formed by support levers (11, 12, 13, 14).

2. Apparatus according to claim 1 **characterised in that** the force measuring sensors (4, 5) are arranged in mounting planes in the region of the rigid intermediate frame (7).

3. Apparatus according to claim 1 or claim 2 **characterised in that** the force measuring sensors (4, 5) are disposed in a common mounting plane (8).

4. Apparatus according to one of claims 1 to 3 **characterised in that** the intermediate frame (7) is mounted to the stationary frame (6) and the measuring shaft (2) to the intermediate frame (7) in such a way that the forces applied to the force measuring sensors (4, 5) are in one plane and are oriented in parallel and in particular coaxial relationship with each other.

5. Apparatus according to one of claims 1 to 4 **characterised in that** the virtual mounting locations (24, 25) lie outside balancing planes (27, 28).

6. Apparatus according to one of claims 1 to 5 **characterised in that** the virtual mounting locations (24, 25) form virtual measurement locations at their points of intersection with the measuring shaft (2).

7. Apparatus according to one of claims 1 to 6 **characterised in that** the virtual mounting locations (24, 25) are linear and extend perpendicularly to the axis (23) of the measuring shaft.

8. Apparatus according to one of claims 1 to 7 **characterised in that** the measuring shaft (2) is supported on the intermediate frame (7) in a second mounting plane (9) having the virtual mounting location (24) formed by the support levers (13, 14) and the intermediate frame (7) is supported on the stationary frame (6) in the mounting plane (8) having the force measuring sensor (5) and with parallel guide means.

9. Apparatus according to one of claims 1 to 8 **characterised in that** the support means (3) has only one virtual mounting location (24).

10. Apparatus according to one of claims 1 to 9 **characterised in that** the one virtual mounting location (24) lies between the balancing planes (27, 28).

11. Apparatus according to one of claims 1 to 9 **characterised in that** the one virtual mounting location (24) lies between the rotary member (1) and the stationary frame (6).

12. Apparatus according to one of claims 1 to 7 **characterised in that** two virtual mounting locations (24, 25) are provided on both sides of the rotary member (1).

13. Apparatus according to one of claims 5 to 12 **characterised in that** a virtual mounting location (24) is disposed approximately in the centre between the two balancing planes (27, 28).

14. Apparatus according to one of claims 1 to 13 **characterised in that** the virtual mounting location (25) formed by a first pair (11, 12) of support levers lies in a prolongation of the measuring shaft (2) which extends with respect to the support means (3) of the measuring shaft (2) in opposite relationship to the longitudinal direction of the measuring shaft (2).

15. Apparatus according to one of claims 1 to 14 **characterised in that** the mounting locations (24, 25) are at points of intersection of the prolongations of the support levers (11, 12 and 13, 14) of the respective pair of support levers.

16. Apparatus according to one of claims 1 to 15 **characterised in that** the intermediate frame (7) is supported on the stationary frame (6) by way of a first pair (11, 12) of support levers and pivots (15-18) and the measuring shaft (2) is supported on the intermediate frame (7) by way of a second pair (13, 14) of support levers and pivots (19-22) and that the axes of the respective pivots (15-22) extend substantially perpendicularly to the direction in which the forces applied to the force measuring sensors (4, 5) are operative and are perpendicular to the axis (23) of the measuring shaft (2).

17. Apparatus according to claim 16 **characterised in that** the support levers (11, 12) of the first pair of support levers are arranged parallel or at an angle whose apex is substantially on the axis (23) of the measuring shaft (2).

18. Apparatus according to claim 16 or claim 17 **characterised in that** the support levers (11-14) are formed by flexurally stiff flat members arranged between the associated pivots (15-22).

19. Apparatus according to one of claims 16 to 18 **characterised in that** the flat members forming the support levers (11-14) are disposed with their faces in the same plane as the axes of the associated pivots (15-22).

20. Apparatus according to one of claims 16 to 19 **characterised in that** the support levers (11-14) and the pivots (15-22) are formed from one piece, wherein the pivots (15-22) are in the form of linearly extending weak locations.

21. Apparatus according to one of claims 1 to 20 **characterised in that** at least one of the two virtual mounting locations (24, 25) is displaced with respect to the axis (23) of the measuring shaft (2) to the side on which the respectively associated force measuring sensor (4, 5) is disposed.

22. Apparatus according to one of claims 1 to 21 **characterised in that** the support for the measuring shaft (2) in the intermediate frame (7) and the support for the intermediate frame (7) on the stationary frame (6) are disposed as viewed in the axial direction of the measuring shaft (2) one behind the other or one beside the other.

23. Apparatus according to one of claims 1 to 22 **characterised in that** the rotary mounting (26) is fixedly connected to a flexurally stiff holding device (29) at an axial spacing with respect to the mounting plane (8) in which the force measuring sensors (5, 6) are disposed and that the holding device (29) is supported on the intermediate frame (8) by way of two support levers (13, 14) arranged at an angle relative to each other and the pivots (19-22).

24. Apparatus according to one of claims 1 to 23 **characterised in that** the weak locations forming pivots (15-22) are of a concave cross-section.

25. Apparatus according to one of claims 1 to 23 **characterised in that** the weak locations forming pivots (15-22) are in the form of linear perforations.

## Revendications

1. Dispositif de mesures de force qui sont produites par un défaut d'équilibrage d'un rotor, comportant
- un arbre (2) de mesure qui monté tournant dans un palier (26) tournant par rapport à son axe (23) et auquel le rotor (1) est fixé pour la mesure, et
- un palier (3), comportant des dynamomètres (4, 5), de l'arbre (2) de mesure sur un cadre (6) à poste fixe,
- le palier (3) comportant un cadre (7) intermédiaire sur lequel l'arbre (2) de mesure prend appui à un plan de palier comportant un dynamomètre,
**caractérisé en ce que**
- le cadre (7) intermédiaire prend appui sur le cadre (6) à poste fixe par l'intermédiaire d'un dynamomètre (5) supplémentaire et
- l'arbre (2) de mesure prend appui sur le cadre (7) intermédiaire et le cadre (7) intermédiaire prend appui sur le cadre (6) à poste fixe de plus en respectivement un point (24, 25) de support virtuel formé par des leviers (11, 12, 13, 14) de support.

2. Dispositif suivant la revendication 1, **caractérisé en ce que** les dynamomètres (4, 5) sont montés dans des plans de palier dans la région du cadre (7) intermédiaire rigide.

3. Dispositif suivant la revendication 1 ou 2, **caractérisé en ce que** les dynamomètres (4, 5) se trouvent dans un plan (8) de palier commun.

4. Dispositif suivant l'une des revendications 1 à 3, **caractérisé en ce que** le cadre (7) intermédiaire est monté sur le cadre (6) à poste fixe et l'arbre (2) de mesure est monté sur le cadre (7) intermédiaire de telle manière que les forces introduites dans les dynamomètres (4, 5) se trouvent dans un plan et sont orientées parallèlement, notamment coaxialement, l'une à l'autre.

5. Dispositif suivant l'une des revendications 1 à 4, **caractérisé en ce que** les points (24, 25) de palier virtuels se trouvent à l'extérieur de plans (27, 28) d'équilibrage.

6. Dispositif suivant l'une des revendications 1 à 5, **caractérisé en ce que** les points (24, 25) de palier virtuels forment à leurs points d'intersections avec l'arbre (2) de mesure des emplacements de mesure virtuels.

7. Dispositif suivant l'une des revendications 1 à 6, **caractérisé en ce que** les points (24, 25) de palier virtuels sont réalisés en forme de droites et s'étendent perpendiculairement à l'axe (23) de l'arbre de mesure.

8. Dispositif suivant l'une des revendications 1 à 7, **caractérisé en ce que** l'arbre (2) de mesure prend appui sur le cadre (7) intermédiaire dans un deuxième plan (9) de palier, qui comporte le point (24) de palier virtuel formé par les leviers (13, 14) de support, et le cadre (7) intermédiaire prend appui sur le cadre (6) à poste fixe dans le plan (8) de palier comportant le dynamomètre (5) et avec guidage parallèle.

9. Dispositif suivant l'une des revendications 1 à 8, **caractérisé en ce que** le palier (3) ne comporte qu'un seul point (24) de palier virtuel.

10. Dispositif suivant l'une des revendications 1 à 9, **caractérisé en ce que** le un point (24) de palier virtuel se trouve entre les plans (27, 28) d'équilibrage.

11. Dispositif suivant l'une des revendications 1 à 9, **caractérisé en ce que** le un point (24) de palier virtuel se trouve entre le rotor (1) et le cadre (6) à poste fixe

12. Dispositif suivant l'une des revendications 1 à 7, **caractérisé en ce qu'**il est prévu deux points (24, 25) de palier virtuels de part et d'autre du rotor.

13. Dispositif suivant l'une des revendications 5 à 12, **caractérisé en ce qu'**un point (24) de palier virtuel se trouve à peu près au milieu entre les deux plans (27, 28) d'équilibrage.

14. Dispositif suivant l'une des revendications 1 à 13, **caractérisé en ce que** le point (25) de palier virtuel formé par une première paire (11, 12) de leviers de support se trouve dans un prolongement de l'arbre (2) de mesure, qui s'étend par rapport au palier (3) de l'arbre (2) de mesure en sens opposé à la direction longitudinale de l'arbre (2) de mesure.

15. Dispositif suivant l'une des revendications 1 à 14, **caractérisé en ce que** les points (24, 25) de palier se trouvent aux points d'intersection des prolongements des leviers (11, 12) et (13, 14) de support de la paire de leviers de supports associés.

16. Dispositif suivant l'une des revendications 1 à 15, **caractérisé en ce que** le cadre (7) de support prend appui par l'intermédiaire d'une première paire (11, 12) de leviers de support et d'articulations (15 à 18) sur le cadre (6) à poste fixe et l'arbre (2) de mesure prend appui par l'intermédiaire d'une deuxième paire (13, 14) de leviers de support et d'articulations (19 à 22) sur le cadre (7) intermédiaire et **en ce que** les axes des articulations (15 à 22) associés s'étendent sensiblement perpendiculairement à la direction dans laquelle les forces appliquées dans les dynamomètres (4, 5) sont actives et sont perpendiculaires à l'axe (23) de l'arbre (2) de mesure.

17. Dispositif suivant la revendication 16, **caractérisé en ce que** les leviers (11, 12) de supports de la première paire de leviers de support sont disposés parallèlement ou en faisant un angle dont le sommet se trouve sensiblement dans l'axe (23) de l'arbre (2) de mesure.

18. Dispositif suivant la revendication 16 ou 17, **caractérisé en ce que** les leviers (11 à 14) de support sont formés par des pièces plates qui résistent à la flexion et qui sont disposées entre les articulations (15 à 22) associées.

19. Dispositif suivant l'une des revendications 16 à 18, **caractérisé en ce que** les pièces plates formant les leviers (11 à 14) de support se trouvent par leurs faces dans le même plan que les axes des articulations (15 à 22) associées

20. Dispositif suivant l'une des revendications 16 à 19, **caractérisé en ce que** les leviers (11 à 14) de supports et les articulations (15 à 22) sont formés d'une pièce, les articulations (15 à 22) étant réalisées en points faibles s'étendant linéairement.

21. Dispositif suivant l'une des revendications 1 à 20, **caractérisé en ce qu'**au moins l'un des deux points (24, 25) de palier virtuels est décalé par rapport à l'axe (23) de l'arbre (2) de mesure vers le côté sur lequel se trouve le dynamomètre (4, 5) associé respectivement.

22. Dispositif suivant l'une des revendications 1 à 21, **caractérisé en ce que** le soutien de l'arbre (2) de mesure dans le cadre (7) intermédiaire et le soutien du cadre (7) intermédiaire sur le cadre (6) à poste fixe se trouvent l'un derrière l'autre ou côte à côte vus dans la direction axiale de l'arbre (2) de mesure.

23. Dispositif suivant l'une des revendications 1 à 22, **caractérisé en ce que** le palier (26) tournant est relié de manière fixe à un dispositif (29) de maintien, résistant à la flexion, à distance axiale par rapport au plan (8) de palier dans lequel se trouvent les dynamomètres (5, 6) et **en ce que** le dispositif (29) de maintien prend appui sur le cadre (8) intermédiaire par l'intermédiaire de deux leviers (13, 14) de support montés en faisant un angle l'un par rapport à l'autre et par l'intermédiaire des articulations (19 à 22).

24. Dispositif suivant l'une des revendications 1 à 23, **caractérisé en ce que** les points faibles formant les articulations (15 à 22) ont une section transversale concave.

25. Dispositif suivant l'une des revendications 1 à 23 **caractérisé en ce que** les points faibles formant les articulations (15 à 22) sont réalisés en perforations linéaires.
